Europäisches Patentamt

European Patent Office

Office européen des brevets

(19)

(11) **EP 1 313 346 A1**

(12) **EUROPEAN PATENT APPLICATION**

(43) Date of publication:
**21.05.2003 Bulletin 2003/21**

(51) Int Cl.$^7$: **H04Q 11/00**

(21) Application number: **01402941.7**

(22) Date of filing: **16.11.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ALCATEL**
**75008 Paris (FR)**

(72) Inventors:
• **Poppe, Fabrice**
**9000 Gent (BE)**

• **Petit, Guido**
**2018 Antwerp (BE)**

(74) Representative: **Narmon, Gisèle et al**
**Industrial Property Department,**
**Alcatel Bell N.V.,**
**Francis Wellesplein 1**
**2018 Antwerpen (BE)**

(54) **Method and apparatus of determining loss characteristics in DWDM links**

(57) In a DWDM optical burst-switched network, an algorithm allows for a given volume of traffic from router A to router B and from router B to router A, expressed as $\gamma_V$, and for a given, hereto respectively associated loss requirements in each direction, expressed as loss requirement asymmetry $\gamma_P$, to determine the value for an optimal link asymmetry $\gamma_N$ for which the losses in both directions show an asymmetry equal to $\gamma_P$, or satisfy a user-defined constraint.

## Figure 2

A-to-B fiber

B-to-A fiber

**Description**

The present invention relates to the determination of loss characteristics in Dense Wavelength Division Multiplexing links, such that a wavelength space between two routers is partitioned to satisfy user-defined constraints.

The rapid growth of the Internet has resulted in a requirement for a higher transmission capacity and for high-speed Internet Protocol (IP) routers. Further, the advent of Dense Wavelength Division Multiplexing (DWDM) technology, in which a single optical fiber is used to transmit several communications channels simultaneously, with each channel transmitting data utilizing a different wavelength of light that are relatively close to one another, has allowed a major increase in the transmission capacity of optical fibers, and thus, the existing optical transport network.

IP routers are also being built in order to accommodate the present high-capacity of optical fibers, but there is still a significant gap between transmission capacity of DWDM fibers and the switching capacity of electronic IP routers. Due to the very high transmission capacity of DWDM links, the major drawback to directly switching IP packets in the optical router is the processing and control speed of the electronic devices. Accordingly, to reduce the burden on the electronic devices controlling the configuration of the optical switch architecture, and thereby increase the router throughput, the switching granularity must be larger than a single IP packet.

This consideration has led to the concept of the Data Burst (DB), where several IP packets assigned to the same optical edge router and belonging to the same Class of Service (CoS), are assembled into a single burst. The DB's are forwarded through the network as one entity, based on the information contained in the header, termed a Burst Header Packet (BHP), associated with the DB. As the processing of burst headers in the optical domain is not practical using today's technology, it is implemented electronically. The assembly of IP packets into DB's and the separation of data and control have led to the concept of Optical Burst Switching.

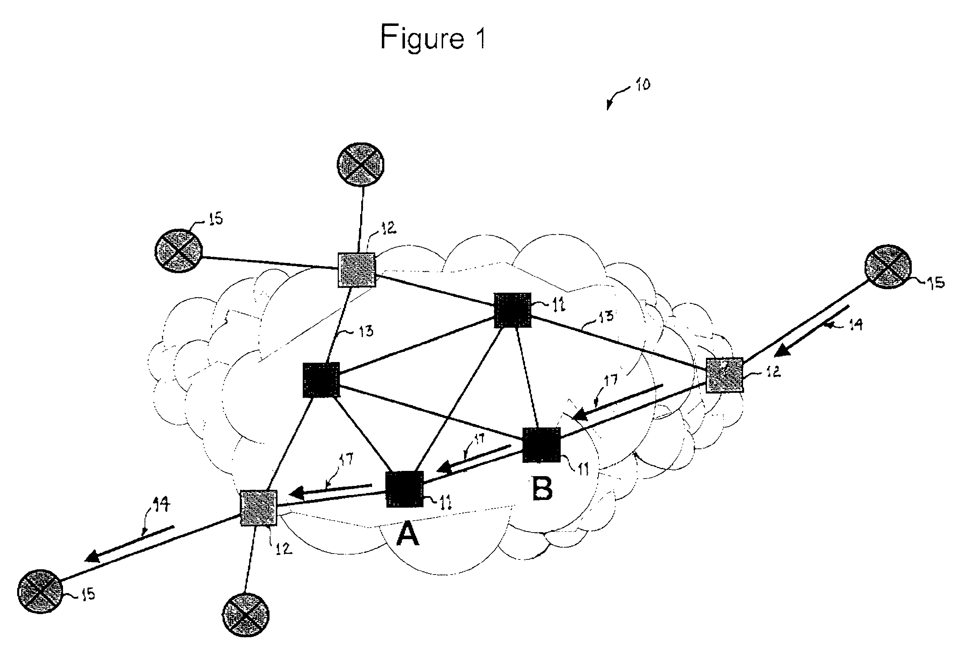

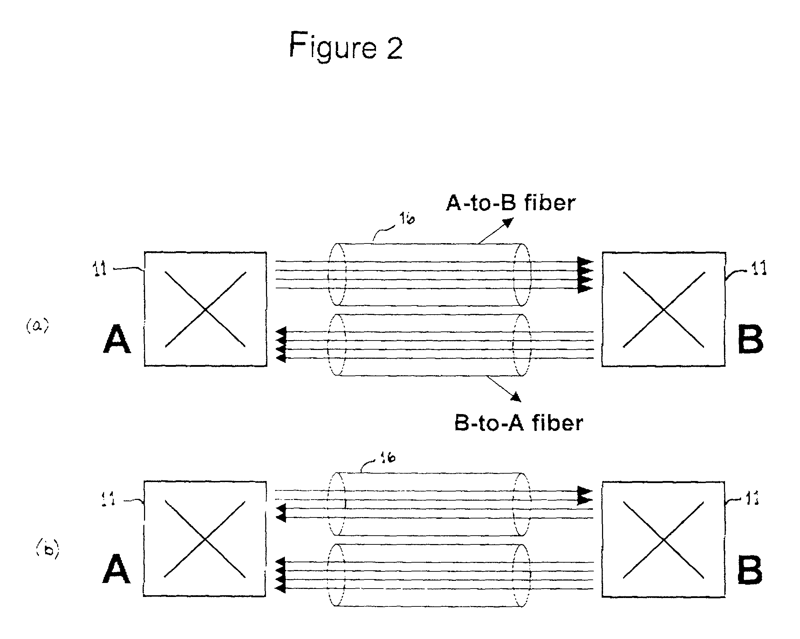

As shown in Figure 1, an optical burst-switched (OBS) network 10 includes core OBS routers 11 and edge OBS routers 12, connected by a plurality of optical fibers 16 (see Figure 2) forming DWDM links 13. The link 13 is defined as a set of channels, each channel (i.e., a unit of transmission capacity in bits/s) consisting of one entire wavelength, or a portion of a wavelength in the case of Time Division Multiplexing (TDM), between two routers 11, 12, which carry DB's 17. Channels carrying DB's are called data channels, and channels carrying BHP's and other control packets are called control channels.

The general architecture of an N x M wavelength optical core router 11 includes input fiber delay lines (FDL's), an optical switching matrix, a switch control unit (SCU) and routing and signal processors. The fixed input FDL's are used to delay the arriving DB's, thus allowing the SCU to have enough time to process the associated BHP's. DB's still remain in the form of optical signals in the core routers 11.

In an OBS network, the ingress edge routers 12 assemble several IP packets 14 with the same egress edge OBS router address and Quality of Service (QoS) requirements into bursts. Core OBS routers 11 forward these bursts 17 through the OBS network. Then, the egress edge OBS router 12 disassembles the bursts back into IP packets 14 to be forwarded to their next hops (i.e., conventional IP routers 15).

However, packet traffic in a data communications network, is highly dynamic and asymmetric. For example, channel groups between adjacent routers 11 and/or 12 need not be symmetrically provided. Typically, in an OBS network, the amount of traffic flowing in both directions on a given link 13 will be different, due to the asymmetric nature of IP traffic. The control of OBS networks has to be optimized in order to enable changing directionality of wavelength channels.

With current optical technology it is possible to partition the wavelength space on a DWDM link 13 between routers A and B, in a set of wavelengths from A to B and a set of wavelengths from B to A (see Figure 2).

When partitioning the wavelength space between router A and router B (N wavelengths) into two sets, containing $N_{AB}$ and $N_{BA}$ wavelengths respectively,

$$N = N_{AB} + N_{BA}$$

the link asymmetry is defined as:

$$\gamma_N = N_{AB} - N_{BA} / N_{AB} + N_{BA}$$

A simple approach would be to do the partitioning such that the number of wavelengths directed from A-to-B (or B-to-A) is proportional to the amount of A-to-B (or B-to-A) traffic.

For example, Figure 2 (a) shows a symmetric DWDM link 13, with $N_{AB} = N_{BA} = 4$, and a link asymmetry $\gamma_N = 0$.

It is also possible to adapt this partitioning dynamically to the traffic between routers A and B, that is, directing more wavelength channels from router A to router B when there is more traffic from A to B than from B to A, and vice versa.

For example, Figure 2 (b) shows an asymmetric DWDM link 13, with $N_{AB} = 2$, and $N_{BA} = 6$, and a link asymmetry $\gamma_N = 0.5$ (i.e., half of the A-to-B wavelengths have been reversed).

However, partitioning the number of wavelengths between routers A and B does not ensure that the loss characteristics in both directions of the routers 11, 12 are equal, or satisfy predefined user-constraints.

Calculating the optimal partitioning, starting from the characteristics of the traffic between routers A and B is by no means trivial.

Methods and apparatuses consistent with that of the present invention relate to partitioning the number of wavelengths in a wavelength space between two routers, such that the loss characteristics in both directions of the routers satisfy pre-defined user constraints.

In one embodiment consistent with the present invention, a method of obtaining predetermined losses between a first router and a second router in a wavelength division multiplexed data communications network, includes the steps of determining an optimal link asymmetry for a predetermined required loss asymmetry based on a bidirectional volume of traffic between the first router and the second router; and partitioning a wavelength space between the first router and the second router based on the optimal link asymmetry.

The predetermined losses can be equalized between the first router and second router, but in another embodiment, can also be user-defined.

In one embodiment, the wavelength division multiplexed data communications network is a Dense Wavelength Division Multiplexing (DWDM) optical burst-switched network including a plurality of edge routers and a plurality of core routers, and the optimal link asymmetry applies to connections between the core routers and to connections between the core routers and the edge routers.

In one embodiment, the determining and partitioning steps are performed dynamically, with the wavelength space being partitioned into a first number of wavelengths directed from the first to the second router, and a second number of wavelengths directed from the second router to the first router. The determining step is based on a predetermined traffic asymmetry. Specifically, the predetermined required loss asymmetry is based on determining a loss corresponding to a traffic volume between the first and second routers, in both directions, and calculating a loss ratio based on the losses. The calculated loss ratio is equal to the required loss asymmetry.

In another embodiment consistent with the present invention, the first and second routers determine each loss independently of from one another, and also determine the loss according to an identical algorithm.

In another embodiment consistent with the present invention, an apparatus which dynamically partitions a wavelength space in a Dense Wavelength Division Multiplexing (DWDM) link of a data communication network, includes a first router a second router; and a plurality of fibers each having a plurality of wavelengths per fiber, the fibers being disposed in the wavelength space and disposed such that a first number of wavelengths are directed from the first router to the second router, and a second number of wavelengths are directed from the second router to the first router; wherein an optical link asymmetry is determined for a required loss asymmetry based on losses in a volume of traffic between the first router and the second router in both directions.

In another embodiment consistent with the present invention, a router in a Dense Wavelength Division Multiplexing (DWDM) link of a data communication network, includes means for determining an optical link asymmetry for a required loss asymmetry based on losses in a bidirectional volume of traffic between the router and at least one other router in the network; and means for dynamically partitioning a wavelength space between the router and the at least one other router in the network, such that the wavelength space is partitioned to equalize losses in the link.

In still another embodiment consistent with the present invention, an apparatus for obtaining predetermined losses between a first router and a second router in a wavelength division multiplexed data communications network, includes means for determining an optimal link asymmetry for a predetermined required loss asymmetry based on a bidirectional volume of traffic between the first router and the second router; and means for partitioning a wavelength space between the first router and the second router based on the optimal link asymmetry.

Finally, in another embodiment consistent with the present invention, an optical burst-switched network, includes a first router; a second router; and a plurality of fibers each having a plurality of wavelengths per fiber, the fibers being disposed in a wavelength space between the first router and the router, and disposed such that a first number of wavelengths are directed from the first router to the second router, and a second number of wavelengths is directed from the second router to the first router; wherein an optical link asymmetry is determined for a required loss asymmetry based on losses in a volume of traffic between the first router and the second router in both directions, such that the wavelength space is partitioned in order to obtain predetermined losses in both directions.

There has thus been outlined, rather broadly, some features of the invention in order that the detailed description thereof that follows may be better understood, and in order that the present contribution to the art may be better appreciated. There are, of course, additional features of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein, as well as the abstract included below, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

Figure 1 depicts an OBS network including edge routers and core routers connected by DWDM links.

Figure 2 (a) depicts a symmetric DWDM link between two routers A and B.

Figure 2(b) depicts an asymmetric DWDM link between two routers A and B.

Figure 3 depicts a graph showing how the optimal link asymmetry for a given traffic asymmetry and required loss asymmetry is determined, according to one embodiment of the present invention.

Methods and apparatuses consistent with the present invention include dynamically adapting the directionality of the wavelength channels on DWDM links 13 to the actual packet traffic pattern in both directions, i.e., from router A to router B and from router B to router A (see Figure 2), in order to continuously keep the loss of DB levels in both directions of the link 13 compliant with user-defined constraints.

Specifically, methods and apparatuses consistent with the present invention include determining an algorithm which allows for a given or pretermined volume of traffic from router A to router B and from router B to router A, expressed as $\gamma_V$, and for a given or predetermined, hereto respectively associated loss requirements in each direction, expressed as loss requirement asymmetry $\gamma_P$, to determine the value for an optimal link asymmetry $\gamma_N$ for which the losses in both directions show an asymmetry equal to $\gamma_P$. Once the algorithm, which is the optimal link asymmetry $\gamma_N$ determining means, obtains the optimal link asymmetry $\gamma_N$, the wavelength space can be partitioned between the two routers such that loss characteristics satisfy predetermined user constraints.

In an optical communications network, for the given traffic volumes $V_{AB}$ and $V_{BA}$, the traffic asymmetry $\gamma_V$ is defined as:

$$\gamma_V = V_{AB\,-}\,V_{BA}\,/\,V_{AB\,+}\,V_{BA}$$

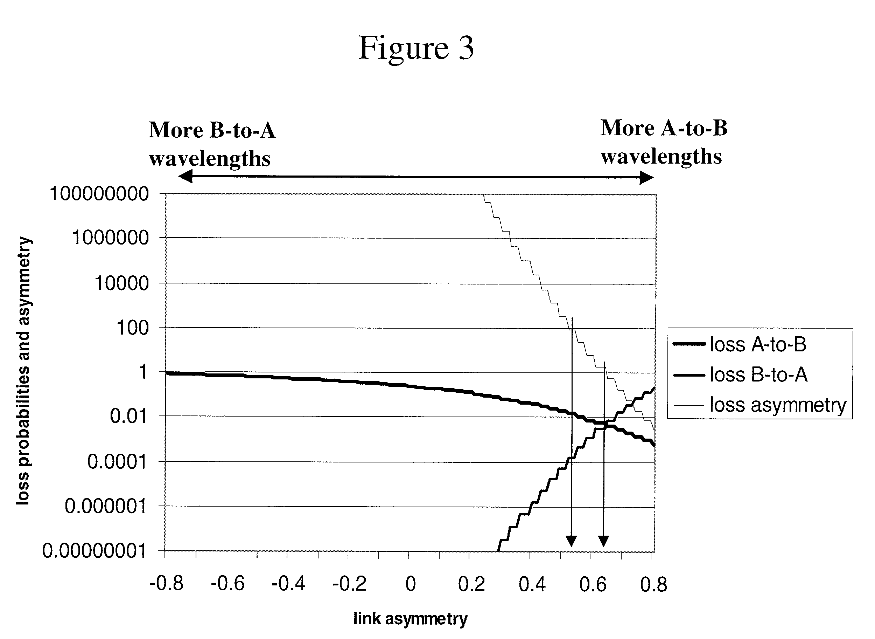

In the methods and system consistent with the present invention, the traffic asymmetry $\gamma_V$ is given or predetermined as a user-defined constraint, as for example, 0.7 (see Figure 3).

Further, the required loss asymmetry, which is determined by the algorithm:

$$\gamma_P = \Sigma_c\,P_c\,V_{c,\,AB}\,/\,\Sigma_c\,P_c\,V_{c,\,BA,}$$

where the loss requirements of the traffic from router A to router B are different from the losses of the traffic from router B to router A, for c traffic classes tolerating a loss of $P_c$, respectively, is also a given or predetermined value as a user-defined constraint. For example, as shown in Figure 3, the required loss asymmetry can be given as any value, such as 1 or 100.

The distribution of the capacity of the part of the wavelength space assigned to direction A-to-B (or B-to-A) over the different classes of traffic c, is the responsibility of the originating node or router A (or B).

The algorithm consistent with that of the present invention, works as follows: one or both of the endnodes or routers A and B, use a $M/M/N_{XY}/K_X$ model to calculate, by known methods, for each possible partitioning of the wavelength space (that is, for each possible value of the link asymmetry $\gamma_N$), the loss $P_{AB}$ (and $P_{BA}$) corresponding to the known traffic volume $V_{AB}$ ( and $V_{BA}$) from A to B (and B to A), where

$N_{XY}$ = the number of wavelength channels directed from x to y (or for example, routers A to B); and

Kx = the number of bursts that can be buffered in node x (or for example, router A).

Therefore, for routers A and B, the losses $P_{AB}$ and $P_{BA}$ are each determined based on a known traffic volume, and a loss ratio of $P_{AB}/P_{BA}$ can then be calculated therefrom.

As shown in Figure 3, for example, the curves for loss $P_{AB}$ and for the loss $P_{BA}$ are shown for a predetermined or given traffic asymmetry $\gamma_V$ of 0.7, and traffic load of 0.75.

Also given in Figure 3, is the number of wavelengths (N = 64) in the wavelength space, and the number of fiber delay lines (FDL's = 4) in the optical core router A (or B).

Thus, for a given calculated loss ratio $P_{AB}/P_{BA}$, the optimal value for the link asymmetry $\gamma_N$ (corresponding to the optimal wavelength space partitioning $N_{AB}$ and $N_{BA}$) can be found. As shown by the two arrows pointing downward from the loss ratio curve in the example of Figure 3, the optimal link asymmetry $\gamma_N$ is 0.52 for a predetermined required loss asymmetry $\gamma_P$ of 100, or 0.64 for a required loss asymmetry $\gamma_P$ of 1.

In other words, the optimal value for the link asymmetry $\gamma_N$ can be found by identifying the point at which the calculated loss ratio $P_{AB}/P_{BA}$ becomes equal to the predetermined required loss asymmetry $\gamma_P$.

Thus, the algorithm consistent with that of the present invention, determines the value of an optimal link asymmetry $\gamma_N$ for which the losses in both directions of the link between routers A and B, are equal ($\gamma_P$=1).

However, the losses in both directions of the link need not be equal, but can also satisfy some user-defined constraint, where perhaps, traffic from one router to another (A-to-B) is more important than in the opposite direction (B-to-A). In that case, the algorithm determines the link asymmetry for which the ratio between the losses in both directions is equal to $\gamma_P$ ($\neq 1$).

After the optimal link asymmetry $\gamma_N$ is obtained, then the wavelength space is partitioned into wavelengths $N_{AB}$ and $N_{BA}$ by the routers, as dynamic partitioning means, for the plurality of optical fibers therein. Accordingly, in one of the two examples shown in Figure 3, where $\gamma_N$ = .52 for a required loss asymmetry $\gamma_P$ of 100, and $N_{AB} + N_{BA} = 64$, the wavelength space would be partitioned into $N_{AB} = 49$ wavelengths and $N_{BA} = 15$ wavelengths.

The determination of the optimal link asymmetry $\gamma_N$ and the resulting partitioning of the wavelength space according to user-defined constraints, can be dynamic, and can change depending on the losses $P_{AB}$ and $P_{BA}$ corresponding to the known traffic volume $V_{AB}$ and $V_{BA}$ between the routers A and B. Thus, the optimal partitioning of the wavelength space to continuously achieve predetermined (or user-defined) loss characteristics can be dynamically obtained in the DWDM link.

Either router A or B can be determined in advance to calculate the losses P in both directions in order obtain the loss ratio $P_{AB} / P_{BA}$. If there is no prior agreement as to which node or router (A or B) has to calculate the losses P in both directions between routers (A or B), each of the nodes or routers A (or B) will calculate the loss P independently from the other node or router B (or A), making it mandatory for both nodes (A and B) to apply the same algorithm.

The above dynamic partitioning of the wavelength space is applicable both to DWDM links connecting two optical burst-switched (OBS) core routers and to DWDM links that connect OBS edge routers to OBS core routers.

Accordingly, with the more efficient exploitation of the capacities of DWDM links in OBS networks, the links can be loaded with more traffic before loss performance becomes unacceptable, leading to higher revenues.

While the invention has been particularly shown with reference to the above embodiments, it will be understood by those skilled in the art that various other changes in the form and details may be made therein without departing from the spirit and the scope of the invention.

**Claims**

1. A method of obtaining predetermined losses between a first router and a second router in a wavelength division multiplexed data communications network, comprising the steps of:

   determining an optimal link asymmetry for a predetermined required loss asymmetry based on a bidirectional volume of traffic between the first router and the second router; and

   partitioning a wavelength space between the first router and the second router based on said optimal link asymmetry.

2. The method according to claim 1, wherein the predetermined losses are user-defined.

3. The method according to claim 2, wherein the predetermined losses are equalized between the first router and the second router.

4. The method according to claim 1, wherein the wavelength division multiplexed data communications network is a Dense Wavelength Division Multiplexing (DWDM) optical burst-switched network comprising a plurality of edge routers and a plurality of core routers.

5. The method according to claim 1, wherein said predetermined required loss asymmetry is based on determining a loss corresponding to a traffic volume between the first router and the second router, in both directions, and calculating a loss ratio based on each said loss.

6. The method according to claim 1, wherein said wavelength space is partitioned into a first number of wavelengths directed from the first router to the second router, and a second number of wavelengths directed from the second router to the first router.

7. The method according to claim 6, wherein said calculated loss ratio is equal to said required loss asymmetry.

8. The method according to claim 1, wherein the determining and partitioning steps are performed dynamically.

9. The method according to claim 5, wherein said determining step is based on a predetermined traffic asymmetry.

10. The method according to claim 5, wherein the first router and the second router each determine said loss independently from one another.

11. The method according to claim 5, wherein the first router and the second router each determine said loss according to an identical algorithm.

12. The method according to claim 4, wherein said optimal link asymmetry applies to connections between said core routers and to connections between said core routers and said edge routers.

13. A method of dynamically equalizing losses in a Dense Wavelength Division Multiplexing (DWDM) link, comprising the steps of:

   determining a traffic asymmetry in a traffic volume between a first router and a second router in both directions;

   determining a required loss asymmetry between said first router and said second router in both directions;

   determining an optimal link asymmetry for said required loss asymmetry; and

   partitioning a wavelength space between said first router and said second router into a first number of wavelengths directed from said first router to said second router, and a second number of wavelengths directed from said second router to said first router.

14. The method according to claim 15, wherein the step of determining said required loss asymmetry further comprises the steps of:

   determining a loss in both directions corresponding to said traffic volume between said first router and said second router; and calculating a loss ratio based on said loss.

15. The method according to claim 14, wherein said calculated loss ratio is equal to said required loss asymmetry.

16. The method according to claim 13, wherein said traffic asymmetry and said required loss asymmetry are predetermined.

17. The method according to claim 13, wherein said partitioning step results in equalizing the predetermined losses between said first router and said second router.

18. A method of dynamically partitioning a wavelength space into a first number of wavelengths directed from a first router to a second router, and a second number of wavelengths directed from the second router to the first router, in a Dense Wavelength Division Multiplexing (DWDM) link of an optical burst-switched network, comprising the steps of:

   providing a predetermined traffic asymmetry derived from a traffic volume between the first router and the second router in both directions;

   providing a predetermined required loss asymmetry based on a loss ratio derived from losses between the first router and the second router in both directions;

   determining an optimal link asymmetry from an intersection of said required loss asymmetry with said loss ratio; and

   partitioning the wavelength space into the first number of wavelengths and the second number of wavelengths between the first router and the second router.

19. An apparatus which dynamically partitions a wavelength space in a Dense Wavelength Division Multiplexing (DWDM) link of a data communication network, comprising:

   a first router;

   a second router; and

   a plurality of fibers each having a plurality of wavelengths per fiber, said fibers being disposed in the wavelength space and disposed such that a first number of wavelengths are directed from said first router to said second router, and a second number of wavelengths are directed from said second router to said first router;

   wherein an optical link asymmetry is determined for a required loss asymmetry based on losses in a volume of traffic between said first router and said second router in both directions.

20. The apparatus according to claim 19, wherein the wavelength space is partitioned in order to equalize losses between said first router and said second router in both directions of the link.

21. The apparatus according to claim 19, wherein said required loss asymmetry is derived from a loss ratio calculated based on said losses in said volume of traffic between said first router and said second router in both directions.

22. The apparatus according to claim 21, wherein said calculated loss ratio is equal to said required loss asymmetry.

23. A router in a Dense Wavelength Division Multiplexing (DWDM) link of a data communication network, comprising:

   means for determining an optical link asymmetry for a required loss asymmetry based on losses in a bidirectional volume of traffic between the router and at least one other router in the network; and

means for dynamically partitioning a wavelength space between the router and said at least one other router in the network, such that the wavelength space is partitioned to equalize losses in the link.

24. An apparatus for obtaining predetermined losses between a first router and a second router in a wavelength division multiplexed data communications network, comprising:

means for determining an optimal link asymmetry for a predetermined required loss asymmetry based on a bidirectional volume of traffic between the first router and the second router; and

means for partitioning a wavelength space between the first router and the second router based on said optimal link asymmetry.

25. The apparatus according to claim 24, wherein said partitioning means equalizes the predetermined losses between said first router and said second router

26. An optical burst-switched network, comprising:

a first router;

a second router; and

a plurality of fibers each having a plurality of wavelengths per fiber, said fibers being disposed in a wavelength space between said first router and said router, and disposed such that a first number of wavelengths are directed from said first router to said second router, and a second number of wavelengths is directed from said second router to said first router;

wherein an optical link asymmetry is determined for a required loss asymmetry based on losses in a volume of traffic between said first router and said second router in both directions, such that said wavelength space is partitioned in order to obtain predetermined losses in both directions.

27. The network according to claim 26, wherein said predetermined losses are equalized between said first router and said second router.

Figure 1

# Figure 2

A-to-B fiber

(a)

A

B

B-to-A fiber

(b)

A

B

# Figure 3

**More B-to-A wavelengths** ← → **More A-to-B wavelengths**

Chart — y-axis: loss probabilities and asymmetry (100000000, 1000000, 10000, 100, 1, 0.01, 0.0001, 0.000001, 0.00000001); x-axis: link asymmetry (-0.8, -0.6, -0.4, -0.2, 0, 0.2, 0.4, 0.6, 0.8)

Legend:
— loss A-to-B
— loss B-to-A
— loss asymmetry

**European Patent Office**

## EUROPEAN SEARCH REPORT

Application Number

EP 01 40 2941

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | QIAO C: "LABELED OPTICAL BURST SWITCHING FOR IP-OVER-WDM INTEGRATION" IEEE COMMUNICATIONS MAGAZINE, IEEE SERVICE CENTER. PISCATAWAY, N.J, US, vol. 38, no. 9, September 2000 (2000-09), pages 104-114, XP000975327 ISSN: 0163-6804 * page 9, left-hand column, paragraphs 22-36 * * page 9, left-hand column, line 63 - right-hand column, line 9 * | 1,13,18, 19,23, 24,26 | H04Q11/00 |
| A | WO 00 01188 A (ERICSSON TELEFON AB L M) 6 January 2000 (2000-01-06) * abstract * | 1-27 | |
| A | BORELLA M S ET AL: "Internet packet loss: measurement and implications for end-to-end QoS" ARCHITECTURAL AND OS SUPPORT FOR MULTIMEDIA APPLICATIONS/FLEXIBLE COMMUNICATION SYSTEMS/WIRELESS NETWORKS AND MOBILE COMPUTING., 1998 PROCEEDINGS OF THE 1998 ICPP WORKSHOPS ON MINNEAPOLIS, MN, USA 14 AUG. 1998, LOS ALAMITOS, CA, USA,IEEE COMPUT. SOC,, 1998, pages 3-12, XP010307555 ISBN: 0-8186-8657-X * paragraph '05.1! * | 1-27 | |
| | | | **TECHNICAL FIELDS SEARCHED (Int.Cl.7)** |
| | | | H04Q |

The present search report has been drawn up for all claims

| Place of search | Date of completion of the search | Examiner |
|---|---|---|
| THE HAGUE | 30 September 2002 | Dhondt, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 40 2941

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2002

| Patent document cited in search report | Publication date | Patent family member(s) | Publication date |
|---|---|---|---|
| WO 0001188 A | 06-01-2000 | US 6334057 B1 | 25-12-2001 |
| | | AU 4945699 A | 17-01-2000 |
| | | CN 1316172 T | 03-10-2001 |
| | | EP 1092333 A1 | 18-04-2001 |
| | | JP 2002519971 T | 02-07-2002 |
| | | WO 0001188 A1 | 06-01-2000 |

EPO FORM P0459

For more details about this annex : see Official Journal of the European Patent Office, No. 12/82